# EUROPEAN PATENT SPECIFICATION

(11) **EP 1 787 557 B1**
(45) Date of publication and mention of the grant of the patent: **06.08.2008**
(21) Application number: 06023959.7
(22) Date of filing: 17.11.2006
(51) Int. Cl.: A47J 43/08

(54) **Motor drive unit for food processing tools**
Antriebseinheit für Küchengerät
Unité d'entraînement pour appareil électroménager de préparation culinaire

(30) Priority: 17.11.2005 IT MI20052200
(43) Date of publication of application: 23.05.2007
(73) Proprietor: Piuri, Pietro, 20020 Solaro MI (IT)
(72) Inventor: Piuri, Pietro, 20020 Solaro MI (IT)
(74) Representative: Premru, Rok

(56) References cited:
- DE-A1- 2 802 155

## Description

The present model relates to a portable, one - hand operable motor drive unit for selectively driving a plurality of food processing tools removably attached to the motor drive unit.

Single - function one - hand operable kitchen appliances are known, such as: electric mixers, electric immersion blenders, choppers and electric knives.

Use of a plurality of single - function kitchen appliances requires a larger storage space, besides involving high purchase costs.

In an attempt to obviate these drawbacks, it is known to use kitchen appliances that can selectively drive two food processing tools.

For example, US 3, 595, 093 and US 5, 803, 598 disclose one - hand operable kitchen appliances which comprise a motor drive unit having a double - ended driving shaft, i.e. projecting from both sides of the motor.

Each end of the driving shaft is able to drive a food processing tool removably attached to the motor drive unit.

In US 3, 595, 093 the two ends of the driving shaft are designed to drive the beaters of a mixer and a pair of knives respectively.

Instead, in US 5, 803, 598, the two ends of the driving shaft are designed to drive an immersion blender and the beaters of a mixer.

Document DE-A-2802155 discloses a motor drive unit according to the preamble of independent claim 1.

However, prior art motor drive units for food processing tools have various drawbacks.

Particularly, most of the above solutions allow to use two food processing tools only.

Furthermore, the provision of an output driving shaft projecting from both sides of the motor considerably increases fabrication costs and space requirements of the motor drive unit.

Also, the provision of a handle joined to the motor drive unit further increases the bulk of the motor drive unit itself.

The object of this invention is to obviate at least some of prior art drawbacks and particularly the drawbacks set out hereinbefore, providing a motor drive unit for food processing tools that has a simple and compact construction.

These objects are fulfilled by a motor drive unit for food processing tools as defined in claim 1.

Further advantages may be achieved by the additional features of the dependent claims.

A possible embodiment of the motor drive unit as defined in the attached claims will be described hereinafter with reference to the attached drawings, where:
- Fig. 1 is a sectional side view of the motor drive unit;

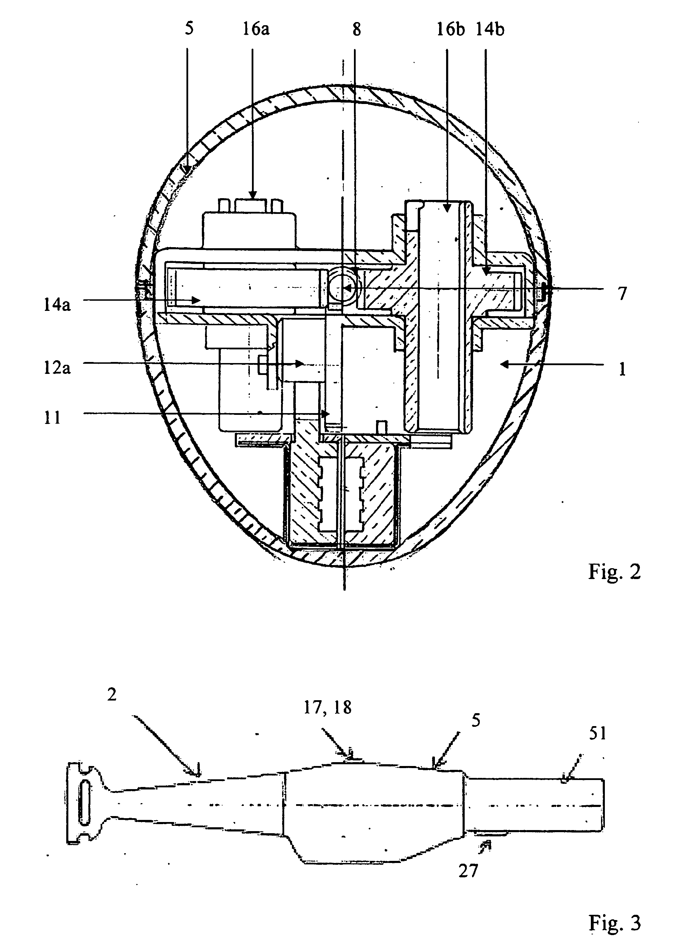

- Fig. 2 is a sectional front view of the motor drive unit;
- Fig. 3 is a side view of the motor drive unit with the first tool mounted thereto;

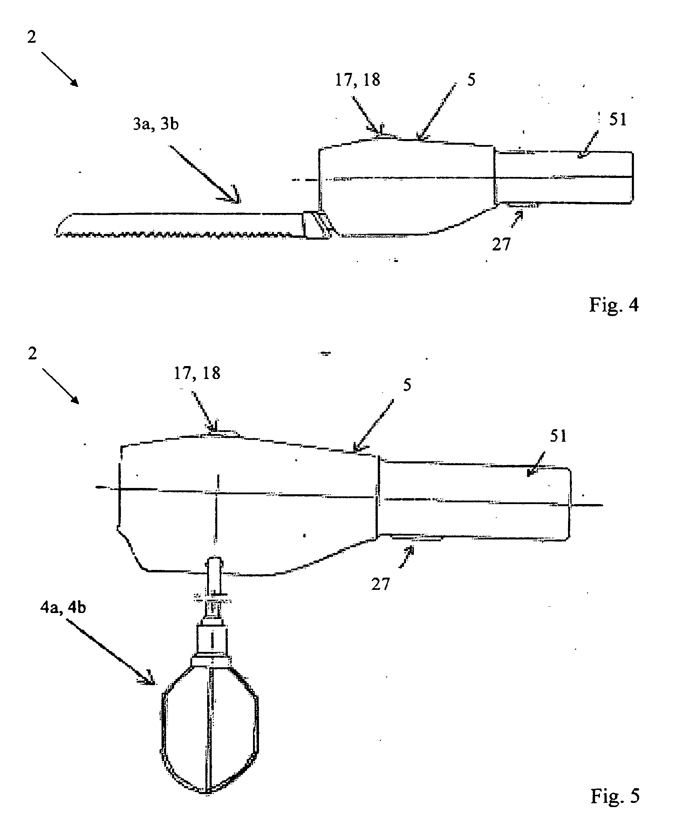

- Fig. 4 is a side view of the motor drive unit with the second tool mounted thereto;
- Fig. 5 is a side view of the motor drive unit with the third tool mounted thereto;

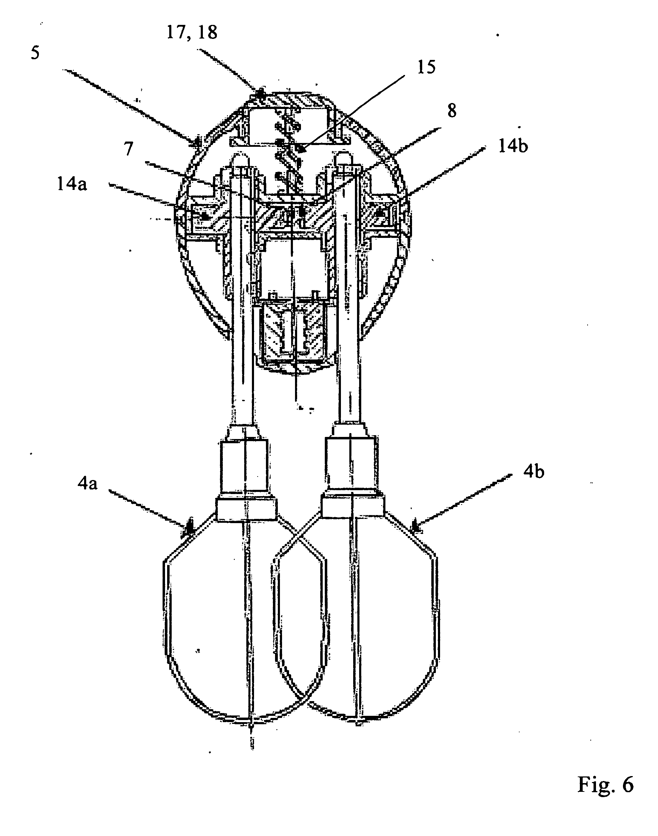

- Fig. 6 is a sectional front view of the motor drive unit with the third tool mounted thereto;

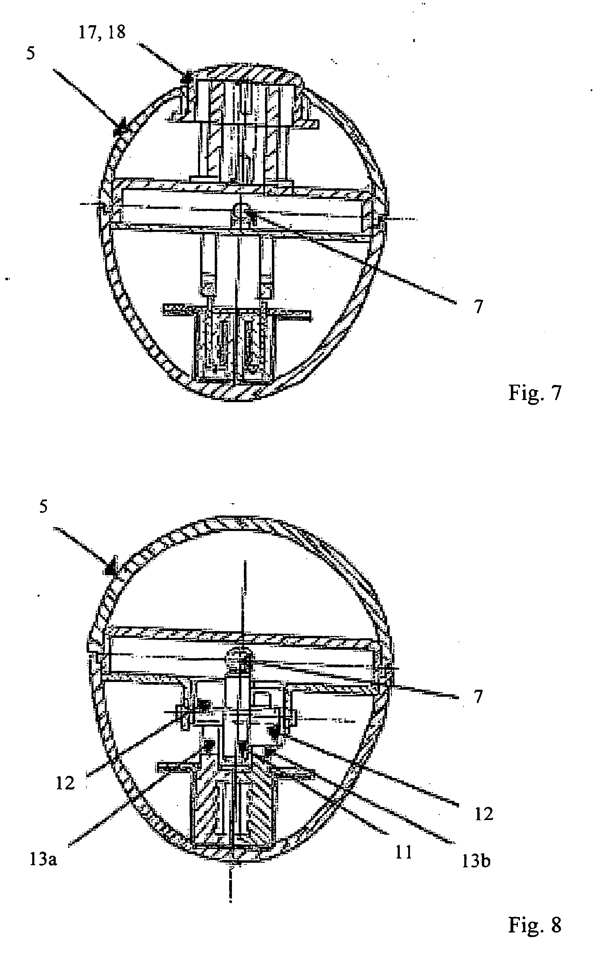

- Fig. 7 is a sectional front view of a detail of the motor drive unit;
- Fig. 8 is a sectional front view of a detail of the motor drive unit; and

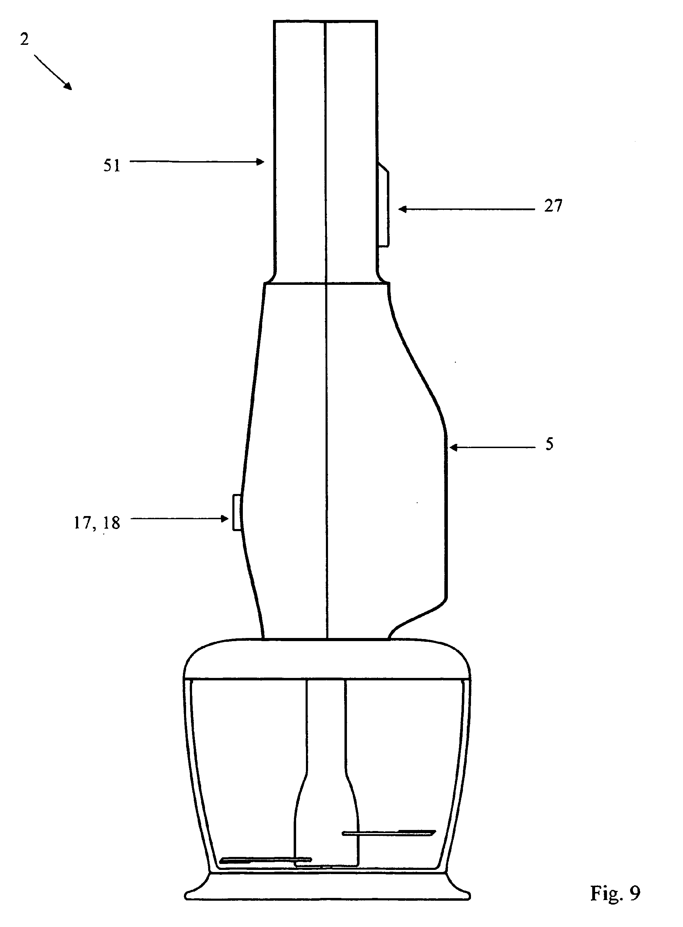

- Fig. 9 is a side view of the motor drive unit with a fourth tool mounted thereto.

Referring to the above drawings, numeral 1 marks a portable and one - hand operable motor drive unit for food processing tools which is adapted to be removably joined to a shaft of a food processing tool (2) - such as an immersion blender (2) or a chopper - to a pair of knives and a pair of beaters 4a, 4b.

The motor drive unit 1 comprises an elongated casing 5, housing a motor 6 having a one - ended driving shaft 7, adapted to drive each tool 2, 3, 4.

The motor drive unit 1 further comprises means 17 for automatic release of the pair of knives 3a, 3b and of the pair of beaters 4a, 4b.

A special on - off switch 27 turns the motor 6 on and off.

According to the illustrated embodiment, a clutch 9 is mounted to the end of the driving shaft 7 for transmitting rotary motion to a shaft (not shown) of an immersion blender 2 or a chopper.

The casing 5 is further provided with a bayonet connection 10 at the clutch 9, for securing the shaft of the immersion blender 2 or the chopper to the motor drive unit 1.

According to the illustrated embodiment, two slides 13a, 13b are provided for reversible connection to the tangs of a pair of knives 3a, 3b.

The slides 13a, 13b preferably comprise fastening means 20 for the tangs of the knives 3a, 3b, that are generally formed of L-shaped profiles, that can move perpendicular to the direction of the motion of the slides 13a, 13b.

The knives 3a, 3b have a groove (not shown), so that the fastening means 20 can engage such groove to allow fastening thereof.

Both the slides 13a, 13b and the tangs 3a, 3b are known to the skilled person and will not be further described herein.

The slides 13a, 13b are designed to move with an alternating linear motion in reciprocal opposite directions parallel to the axis of the driving shaft 7.

The slides 13a, 13b are driven by the driving shaft 7 through a first linkage 8, 11, 12, 23, comprising an involute screw 8, a gearwheel 11 coupled to the involute screw 8, and a cam mechanism 12, 23.

Preferably, the cam mechanism 12, 23 comprises a pair of pins 12a, 12b which extend eccentrically with respect to the axis of rotation of the gearwheel 11 and are arranged in diametrically opposite positions relative to the axis of rotation of the gearwheel 11.

The pins 12a, 12b cooperate with a pair of cam followers 23a, 23b, integral with the slides 13a, 13b.

In accordance with the illustrated embodiment, two quick couplings 16a, 16b are provided for connection to the ends of the shafts of two beaters 4a, 4b.

These quick couplings 16a, 16b are driven by the driving shaft 7 through a second linkage 8, 14a, 14b, that comprises an involute screw 8 and two gearwheels 14a, 14b disposed symmetrically with respect to the involute screw 8.

The quick couplings 16a, 16b are coaxially mounted on the two gearwheels 14a, 14b.

In a possible embodiment, the quick couplings 16a, 16b have an axial groove for engagement of one or more axial projections on the beaters 4a, 4b.

In the preferred embodiment, the linkages that control rotation of the beaters 4a, 4b and the alternating motion of the knives 3a, 3b have in common the involute screw 8, and the pair of gearwheels 14a, 14b which control rotation of the couplings of the beaters and whose axes of rotation are perpendicular to the axis of rotation of the gearwheel 11 which controls the translational motion of the slides.

Preferably, the release means 17 comprise a single button 18, operable against the action of a return spring 15 for directly pushing the free ends of the shafts of the beaters 4a, 4b.

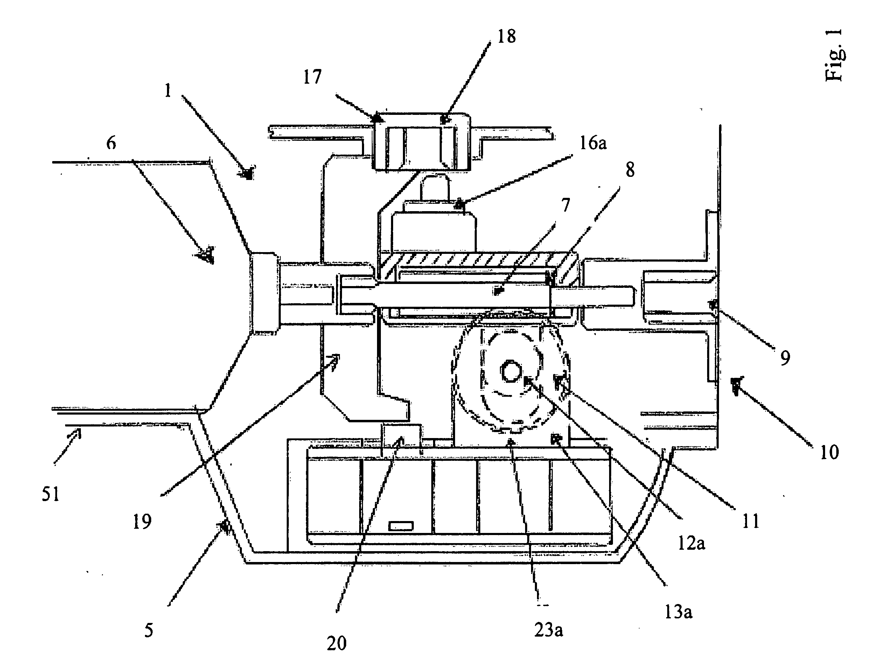

This same button 18 may further have an extension 19 for pressing against the fastening means 20 and cause the knives 3a, 3b to be released (Fig. 1).

In the preferred embodiment, a part 51 of the casing 5 of the motor drive unit 1 is designed to allow holding thereof in a hand.

The motor drive unit 1 may be powered directly by a power cord (not shown).

Suitably, an electrical battery may be housed within the casing 5 for powering the motor 6, thereby allowing cordless operation.

This feature adds efficiency to the appliance and further reduces the risks associated to the use of a household appliance powered with network current.

The electrical battery may be charged using a charge stand (e.g. an induction power supply) to be also used for storage of the appliance when not in use.

## Claims

1. A motor drive unit (1) for food processing tools, adapted to be removably joined to
- a shaft of a food processing tool (2), particularly an immersion blender (2) or a chopper,
- a pair of knives (3a, 3b), and
- a pair of beaters (4a, 4b),
said motor drive unit (1) comprising release means (17) for releasing said of knives (3a,3b) and said pair of beaters (4a, 4b),
said motor unit (1) comprising a casing (5) housing an electric motor (6) **characterised in that** said motor (6) has a one - ended driving shaft (7), adapted to drive each of said tools (2, 3, 4).

2. A motor drive unit (1) as claimed in claim 1, wherein a clutch (9) is mounted to the end of said driving shaft (7) and wherein said casing (5) has a bayonet connection (10) at said clutch (9).

3. A motor drive unit (1) as claimed in claim 1 or 2, wherein two slides (13a, 13b) are provided for reversible connection to the tangs of a pair of knives (3a, 3b), said slides (13a, 13b) being designed to move with an alternating linear motion in reciprocal opposite directions parallel to the axis of the driving shaft (7), said slides (13a, 13b) being driven by said driving shaft (7) through a first linkage (8, 11, 12, 23) which comprises an involute screw (8), a gearwheel (11) coupled to said involute screw (8), and a cam mechanism (12, 23).

4. A motor drive unit (1) as claimed in claim 3, wherein said cam mechanism (12, 23) comprises a pair of pins (12a, 12b) which extend eccentrically with respect to the axis of rotation of said gearwheel (11) and in diametrically opposite directions, said eccentric pins (12) cooperating with a pair of cam followers (23a, 23b) that are integral with said slides (13a, 13b).

5. A motor drive unit (1) as claimed in any of the preceding claims, wherein two quick couplings (16a, 16b) are provided for connection to the ends of the shafts of two beaters (4a, 4b), said quick couplings (16a, 16b) being driven by said driving shaft (7) through a second linkage (8, 14a, 14b), that comprises an involute screw (8) and two gearwheels (14a, 14b) disposed symmetrically with respect to said involute screw (8), said quick couplings (16a, 166) being coaxially mounted on said two gearwheels (14a, 14b).

6. A motor drive unit as claimed in claim 5 when dependent from claim 3 or 4, wherein said involute screw (8) is shared by both said first and second linkage (8, 11, 12, 23; 8, 14a, 14b) and wherein said two gearwheels (14a, 14b) of said second linkage have axes of rotation perpendicular to the axis of rotation of the gearwheel (11) of said first linkage.

7. A motor drive unit (1) as claimed in any of the preceding claims, wherein said release means (17) comprise a single button (18), operable against the action of a return spring (15) for directly pushing the free ends of said shafts of said beaters (4) and for pressing against the fastening means (20) of said knives (3a, 3b).

8. A motor drive unit (1) as claimed in any of the preceding claims, wherein a part (51) of said casing (5) is designed to allow one - hand holding and operation thereof.

9. A motor drive unit (1) as claimed in any of the preceding claims, **characterized in that** it comprises an electrical battery for powering said electrical motor (6).

## Patentansprüche

1. Antriebsmotoreinheit (1) für Nahrungsmittelzubereitungswerkzeuge, geeignet zum lösbaren Verbinden mit
- einem Schaft eines Nahrungsmittelzubereitungswerkzeugs (2), insbesondere eines Eintauchmixers (2) oder Häckslers,
- einem Paar Messer (3a, 3b) und
- einem Paar Rührbesen (4a, 4b),
wobei die genannte Antriebsmotoreinheit (1) eine Entriegelungseinrichtung (17) zur Freigabe des genannten Paar Messer (3a, 3b) und des genannten Paar Rührbesen (4a, 4b), aufweist, wobei die genannte Antriebsmotoreinheit (1) ein Gehäuse (5) hat, das einen Elektromotor (6) aufnimmt, **dadurch gekennzeichnet, dass** der genannte Motor (6) eine einendige Antriebswelle (7) hat, die dazu geeignet ist jedes der genannten Geräte (2, 3, 4) anzutreiben.

2. Antriebsmotoreinheit (1) nach Anspruch 1, wobei am Ende der genannten Antriebswelle (7) eine Kupplung (9) angebracht ist und wobei das genannte Gehäuse (5) eine Bajonettverbindung (10) an der genannten Kupplung (9) aufweist.

3. Antriebsmotoreinheit (1) nach Anspruch 1 oder 2, wobei zwei Führungen (13a, 13b) zum reversiblen Verbinden mit den Griffzapfen des Paar Messer (3a, 3b) vorgesehen sind, welche Führungen (13a, 13b) dazu ausgestaltet sind, mit einer abwechselnden Linearbewegung in zueinander entgegengesetzte Richtungen parallel zur Achse der Antriebswelle (7) zu bewegen, welche Führungen (13a, 13b) von der genannten Antriebswelle (7) über eine erste Verbindung (8, 11, 12, 13) angetrieben werden, die eine evolvente Spindel (8), ein mit der evolventen Spindel (8) gekoppeltes Zahnrad (11) und ein Kurvengetriebe (12, 23) aufweist.

4. Antriebsmotoreinheit (1) nach Anspruch 3, wobei das genannte Kurvengetriebe (12, 23) ein Paar Nocken (12a, 12b) aufweist, die sich exzentrisch zur Rotationsachse des genannten Zahnrads (11) in diametral einander gegenüberliegender Anordnung erstrecken, welche exzentrischen Nocken (12) mit einem Paar Nockenmitnehmern (23a, 23b) zusammenwirken, die in die genannten Führungen (13a, 13b) integriert sind.

5. Antriebsmotoreinheit (1) nach einem der vorhergehenden Ansprüche, wobei zwei Schnellkupplungen (16a, 16b) zum Verbinden mit den Enden der Schafte der Rührbesen (4a, 4b) vorgesehen sind, welche Schnellkupplungen (16a, 16b) durch die genannte Antriebswelle (7) über eine zweite Verbindung (8, 14a, 14b) angetrieben werden, die eine evolvente Spindel (8) und zwei symmetrisch zu der genannten evolventen Spindel (8) angeordnete Zahnräder (14a, 14b) aufweist, welche Schnellkupplungen (16a, 16b) koaxial auf den genannten Zahnrädern (14a, 14b) angebracht sind.

6. Antriebsmotoreinheit (1) nach Anspruch 5, wenn von Anspruch 3 oder 4 abhängig, wobei die genannte evolvente Spindel (8) durch die beiden genannten ersten und zweiten Verbindungen (8, 11, 12, 23; 8, 14a, 14b) geteilt ist und wobei die beiden genannten Zahnräder (14a, 14b) der genannten zweiten Verbindung Rotationsachsen haben, die rechtwinklig zur Rotationsachse des Zahnrads (11) der genannten ersten Verbindung angeordnet sind.

7. Antriebsmotoreinheit (1) nach einem der vorhergehenden Ansprüche, wobei die genannte Entriegelungseinrichtung (17) einen einzigen Knopf (18) aufweist, der entgegen der Kraft einer Rückstellfeder (15) betätigbar ist, um direkt die freien Enden des genannten Schafts der genannten Rührbesen (4) zu drücken und um gegen die Befestigungsmittel der genannten Messer (3a, 3b) zu drücken.

8. Antriebsmotoreinheit (1) nach einem der vorhergehenden Ansprüche, wobei ein Teil (51) des genannten Gehäuses (5) dazu ausgestaltet ist, dessen einhändiges Halten und Bedienen zu ermöglichen.

9. Antriebsmotoreinheit (1) nach einem der vorhergehenden Ansprüche, **dadurch gekennzeichnet, dass** sie eine elektrische Batterie zur Energieversorgung des Elektromotors (6) umfasst.

## Revendications

1. Unité d'entraînement (1) pour pièces d'appareil électroménager de préparation culinaire adaptée pour être fixée amovible à :
- une tige d'outil de transformation des aliments (2) en particulier un mélangeur immergé (2) ou un hachoir,
- une paire de couteaux (3a, 3b) et
- une paire de battoirs (4a, 4b),
ladite unité d'entraînement (1) comprenant un boîtier logeant un moteur électrique (6), **caractérisée en ce que** ledit moteur (6) a une extrémité de tige d'entraînement (7) adaptée pour actionner chacune desdites pièces (2, 3, 4), ladite unité d'entraînement (1) comprenant un moyen de débrayage (17) pour débrayer ladite paire de couteaux (3a, 3b) et ladite paire de battoirs (4a, 4b).

2. Unité d'entraînement (1) selon la revendication 1, dans laquelle un embrayage (9) est disposé à l'extrémité de ladite tige d'entraînement (7) et dans laquelle ledit boîtier (5) est muni d'un moyen de prise à baïonnette (10) prise audit embrayage (9).

3. Unité d'entraînement (1) selon l'une des revendications 1 ou 2, dans laquelle deux glissières (13a, 13b) sont prévues pour une prise réversible aux tenons d'une paire de couteaux (3a, 3b), lesdites glissières (13a, 13b) étant conçues pour un déplacement suivant un mouvement linéaire et alternatif en sens opposés réciproques parallèlement à l'axe de la tige d'entraînement (7), à travers une première jonction (8, 11, 12, 23) comprenant une vis à courbe développante (8), un pignon (11) couplé à ladite vis à courbe développante (8) et un mécanisme à came (12, 23).

4. Unité d'entraînement (1) selon la revendication 3, dans laquelle ledit mécanisme à came (12, 23) comprend une paire de goupilles (12a, 12b) qui s'étendent excentriquement par rapport à l'axe de rotation dudit pignon (11) et en directions opposées diamétralement, lesdites goupilles excentrées (12) coopérant avec une paire de galets de came (23a, 23b) qui sont intégrés auxdites glissières (13a, 13b).

5. Unité d'entraînement (1) selon l'une quelconque des revendications précédentes, dans laquelle deux accouplements rapides (16a, 16b) sont prévus pour entrer en prise avec l'extrémité des tiges des deux battoirs (4a, 4b), lesdits accouplements rapides (16a, 16b) étant entraînés par lesdites tiges d'entraînement (7) au travers une seconde jonction (8, 14a, 14b) comprenant une vis à courbe développante (8) et deux pignons (14a, 14b) disposés symétriquement par rapport à ladite vis à courbe développante (8), lesdits accouplements rapides (16a, 16b) étant montés coaxialement sur lesdits pignons (14a, 14b).

6. Unité d'entraînement (1) selon la revendication 5 dépendante des revendications 3 ou 4, dans laquelle ladite vis à courbe développante (8) est partagée par les deux première et seconde jonctions (8, 11, 12, 23 ; 8, 14a, 14b) et dans laquelle lesdits deux pignons (14a, 14b) de ladite seconde jonction ont des axes de rotation perpendiculaires à l'axe de rotation du pignon (11) de ladite première jonction.

7. Unité d'entraînement (1) selon l'une quelconque des revendications précédentes, dans laquelle lesdits moyens de débrayage (17) comprennent un unique bouton (18) fonctionnant contre l'action d'un ressort de rappel (15) pour pousser directement les extrémités libres desdites tiges desdits battoirs (4) et pour presser contre les moyens de fixation (20) desdits couteaux (3a, 3b).

8. Unité d'entraînement (1) selon l'une quelconque des revendications précédentes, dans laquelle une partie (51) dudit boîtier (5) est conçue pour permettre la préhension d'une seule main et son utilisation.

9. Unité d'entraînement (1) selon l'une quelconque des revendications précédentes, **caractérisée en ce qu'**elle comprend une pile électrique pour alimenter ledit moteur électrique (6).
